(19) Europäisches Patentamt
European Patent Office
Office européen des brevets

(11) **EP 1 370 120 B1**

(12) **EUROPEAN PATENT SPECIFICATION**

(45) Date of publication and mention
of the grant of the patent:
**07.07.2010 Bulletin 2010/27**

(51) Int Cl.:
*H05B 41/16* *(2006.01)*     *H05B 41/282* *(2006.01)*
*H05B 41/28* *(2006.01)*     *H05B 41/292* *(2006.01)*

(21) Application number: **01915749.4**

(86) International application number:
**PCT/JP2001/002371**

(22) Date of filing: **23.03.2001**

(87) International publication number:
**WO 2002/078402 (03.10.2002 Gazette 2002/40)**

(54) **DEVICE FOR OPERATING DISCHARGE LAMP**

EINRICHTUNG ZUM BETRIEB EINER ENTLADUNGSLAMPE

DISPOSITIF D'EXPLOITATION D'UNE LAMPE A DECHARGE

(84) Designated Contracting States:
**DE FR**

(43) Date of publication of application:
**10.12.2003 Bulletin 2003/50**

(73) Proprietor: **MITSUBISHI DENKI KABUSHIKI KAISHA**
**Chiyoda-ku**
**Tokyo 100-8310 (JP)**

(72) Inventor: **KINOSHITA, Hidehiko,**
**MITSUBISHI DENKI K. K.**
**Chiyoda-ku, Tokyo 100-8310 (JP)**

(74) Representative: **HOFFMANN EITLE**
**Patent- und Rechtsanwälte**
**Arabellastrasse 4**
**81925 München (DE)**

(56) References cited:
JP-A- 7 201 472     JP-A- 8 008 087
JP-A- 8 222 381     JP-A- 9 092 481
JP-A- 2000 082 593     US-A- 6 075 326

**Description**

Technical field

This invention relates to a discharge lamp lighting device used as a light source for headlights of automobiles.

Background Art

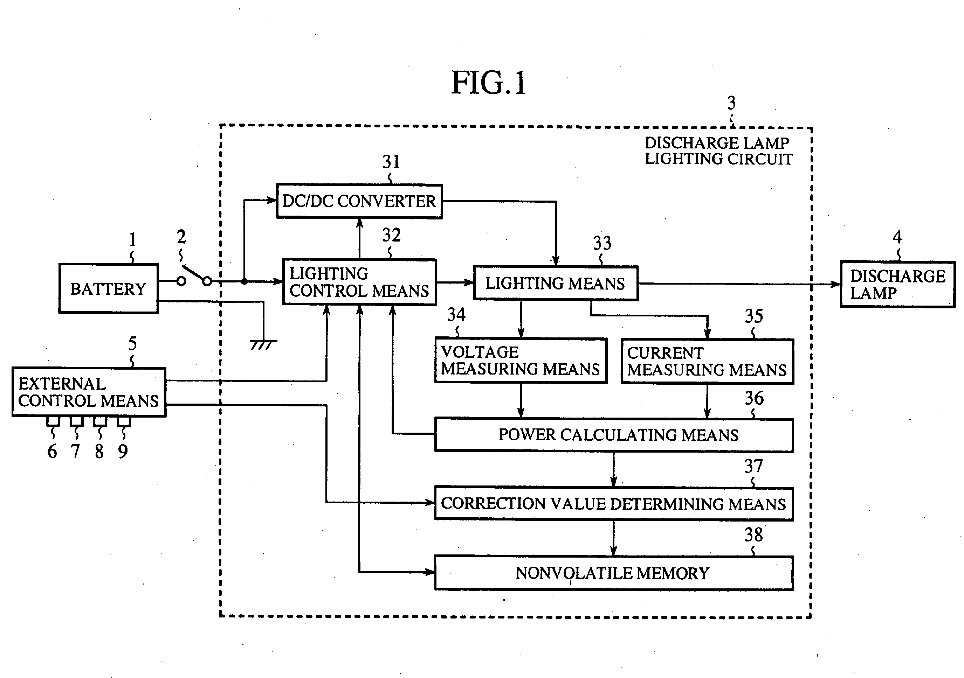

Fig. 1 is a block diagram showing the conventional discharge lamp lighting device disclosed in Publication of Unexamined Patent Application No. 7-201472.

Referring to Fig. 1, reference numeral 1 denotes a battery mounted on an automobile, reference numeral 4 a discharge lamp used for the headlights of the automobile, reference numeral 3 a discharge lamp lighting circuit for automobile for boosting and supplying power from the battery 1 to the discharge lamp 4, reference numeral 33 lighting means for keeping the discharge lamp 4 on after lighting the discharge lamp 4 by applying a high voltage, and reference numeral 32 control means connected to the lighting means 33 for controlling the operation of the lighting means 33. Reference numeral 34 denotes lighting voltage measuring means connected to the lighting means 33 for measuring the lighting voltage of the discharge lamp 4, reference numeral 35 lighting current measuring means connected to the lighting means 33 for measuring the lighting current of the discharge lamp 4, reference numeral 36 power calculating means connected to the lighting voltage measuring means 34 and the lighting current measuring means 35 for calculating the lighting power from the respective measured values, and outputting the calculated value to the lighting control means 32, reference numeral 37 correction value determining means for determining a correction value for correcting the errors of the voltage measuring means 34 and the current measuring means 35 based on the calculated result of the power calculating means 36 and an instruction of the lighting control means 32, reference numeral 38 a nonvolatile memory for storing therein the correction value. The discharge lamp lighting device is configured to read the correction value stored in the nonvolatile memory 38 into the lighting control means 32 and to correct the optical rising characteristic of the discharge lamp 4. Reference numeral 5 denotes external control means, and the instruction to this correction value determining means 37 is given through the external control means 5 connected to the lighting control means 32. Reference numeral 6 denotes the mode button of the external control means 5, reference numeral 7 the set button of the external control means 5, reference numeral 8 the up-setting button of the external control means 5, and reference numeral 9 the down-setting button of the external control means 5.

Now, the operation of the conventional discharge lamp lighting device will be described.

First, the correction method of the correction value determining means 37 involves actuation of the discharge lamp 4 or a load having a reference characteristic equivalent to the discharge lamp 4, selection of stable control by the mode button 6, adjustment by the up-setting button 8 and the down-setting button 9 to 35 W, and determination of 35 W measuring power $W_{M35}$ by the set button 7.

Then, the correction method involves selection of actuation control by the mode button 6, adjustment by the up-setting button 8 and the down-setting button 9, and determination of 75 W correction power $W_{M75}$ by the set button 7. Upon determination of the correction power of 35 W and 75 W, correction power and correction value are calculated by internal operation and stored in the nonvolatile memory 38, and the values are read by the lighting control means 32 to make power correction when control is made.

Making the above two power corrections by the correction power and correction value signifies the correction of voltage and current.

The conventional discharge lamp lighting device thus configured as described above requires the following two-step operation. The mode button 6 is pressed to select actuation control and set the 35 W measuring power, and thereafter the mode button is pressed again to select actuation control and set the 75 W correction power. Thus, the conventional device entails a problem that power correction takes much time.

Further, the necessity to store two kinds of data, correction power and correction value in the nonvolatile memory 38 to correct the power involves a problem that more memory area of the nonvolatile memory 38 should be secured.

Further, the correction of power in the manufacturing process entails a problem that, if the output power changed with the passage of time, it could not be corrected.

This invention has been made to solve the above problems, and an object thereof is to provide a discharge lamp lighting device which improves productivity of the correction of power and reduction in the amount of memory for storing the correction value.

Another object of the invention is to provide a discharge lamp lighting device which corrects the output power, even if the output power varies due to a change with the passage of time.

Document JP 2000-82593 relates to a discharge lamp lighting device comprising an amplifier for adapting the voltage of the DC-DC converter to the microcomputer, wherein an error coefficient of the amplifying circuit is used.

Disclosure of Invention

The object of the present invention is achieved by the subject matter of the independent claim 1. Further advantageous embodiments are defined by the dependent claims.

The discharge lamp lighting device according to an example includes an A/D converter for measuring the discharge lamp voltage, a D/A converter for outputting a target current, reference voltage error calculating means for calculating the error a of a reference voltage for the true value of the reference voltage from a converted result of a predetermined voltage by the A/D converter based on the reference voltage, a nonvolatile memory for storing therein the error a of the reference voltage, voltage correcting means for correcting the result converted by the A/D converter in relation to the magnitude of the reference voltage error stored in the nonvolatile memory, and current correcting means for correcting the value outputted to the D/A converter in relation to the magnitude of the reference voltage error stored in the nonvolatile memory.

This not only eliminates the need for adjustment operation for each of the input voltage and the output current in power adjustment, which shortens the adjusting time, but also relieves the operation load on the microcomputer, thereby allowing the use of a lower-grade microcomputer to go down the cost.

Further, the capacity of the nonvolatile memory can be reduced, thereby permitting the use of a lower-capacity nonvolatile memory to go down the cost.

The discharge lamp lighting device according to an example further includes a communication terminal for receiving therefrom an external signal, and the predetermined voltage is a voltage generated across both ends of the power adjusting resistance connected in place of the discharge lamp, and by sending a signal instructing the communication terminal to store the error a of the reference voltage into the nonvolatile memory after the voltage across both ends of the power adjusting resistance comes to a predetermined value, the error a is stored in the nonvolatile memory.

This enables an adjustment by only connecting a resistance to the output.

The discharge lamp lighting device according to an example further includes a communication terminal for receiving therefrom an external signal, and the predetermined voltage is a voltage generated across both ends of the power adjusting resistance connected in place of the discharge lamp, and when the voltage across both ends of the power adjusting resistance inputted to the communication terminal comes to a predetermined value, the error a of the reference voltage is stored in the nonvolatile memory.

This enables an adjustment by only connecting a resistance to the output.

The discharge lamp lighting device according to an example an A/D converter for measuring the discharge lamp voltage, a D/A converter for outputting a target current, a communication terminal for receiving therefrom the reference voltage for the A/D converter and D/A converter and an external signal, reference voltage error calculating means connected to the communication terminal for calculating the error cc for the true value of the reference voltage from the voltage across both ends of the discharge lamp which is read in and the result converted by the A/D converter, a nonvolatile memory for storing therein the reference voltage error a. , voltage correcting means for correcting the result converted by the A/D converter in relation to the magnitude of the reference voltage error a stored in the nonvolatile memory, and current correcting means for correcting the value outputted to the D/A converter in relation to the magnitude of the reference voltage error a stored in the nonvolatile memory.

This not only eliminates the need for adjustment operation for each of the input voltage and the output current in power adjustment, which shortens the adjusting time, but also relieves the operation load on the microcomputer, thereby allowing the use of a lower-grade microcomputer to go down the cost.

Further, the capacity of the nonvolatile memory can be reduced, thereby enabling the use of a lower-capacity nonvolatile memory to go down the cost.

Further, this dispenses with special devices such as a variable adjusting resistor for power adjustment or communication facility for power adjustment, thereby reducing the number of process steps in production as well as the facility cost.

In the discharge lamp lighting device according to an example, when the voltage across both ends of the discharge lamp inputted to a communication terminal comes to a predetermined value, the reference voltage error a is stored in the nonvolatile memory.

This permits an adjustment by only connecting a resistance to the output.

In the discharge lamp lighting device according to an example, the predetermined voltage is the reference voltage.

This dispenses with special devices such as a variable adjusting resistor and a voltmeter for power adjustment, and communication facility for power adjustment, thereby enabling reduction in the number of process steps in production as well as the facility cost.

In the discharge lamp lighting device according to an example, when the reference voltage comes to a predetermined value, the error $\alpha$ of the reference voltage is stored in a nonvolatile memory.

Since the power correction can be periodically done, change in the output power due to a change in the reference voltage with the passage of time can be corrected, thereby keeping the output power with high precision.

In the discharge lamp lighting device according to an example, after a predetermined time has elapsed since the lighting of the discharge lamp, the error $\alpha$ of the reference voltage is stored in a nonvolatile memory at least once.

This corrects the change in the output power due to a change in the reference voltage with the passage of time, thereby keeping the output power with high precision.

In the discharge lamp lighting device according to an example, the correction of the result which is converted by the A/D converter is done by the voltage correcting means by dividing the converted result by the error a, and the correction of a value

outputted to the D/A converter is done by the current correcting means by multiplying the outputted value by the error a.

This not only eliminates the need for adjustment operation for each of the input voltage and the output current in power adjustment, which shortens the adjusting time, but also relieves the load on the microcomputer, thereby permitting the use of a lower-grade

microcomputer to go down the cost.

Further, the capacity of the nonvolatile memory can be reduced, thereby permitting a lower-capacity nonvolatile memory to go down the cost.

Brief Description of the Drawings

Fig. 1 is a block diagram showing the conventional discharge lamp lighting device;

Fig. 2 is a block diagram showing the discharge lamp lighting device according to a first embodiment of the present invention;

Fig. 3 is a block diagram showing the discharge lamp lighting device according to a first embodiment;

Fig. 4 is a block diagram showing the discharge lamp lighting device according to a second embodiment of the present invention;

Fig. 5 is a block diagram showing the discharge lamp lighting device according to a third embodiment of the present invention;

Fig. 6 is a flowchart showing the calculation procedure of the error $\alpha$ in a microcomputer according to a first embodiment;

Fig. 7 is flowchart showing the calculation procedure of the $\alpha$ in a microcomputer according to a second embodiment;

Fig. 8 is a flowchart showing the calculation procedure of the error $\alpha$ in a microcomputer according to a third embodiment; and

Fig. 9 is a flowchart showing the output correction procedure in a microcomputer according to a first, a second and a third embodiment.

Best Mode for Carrying Out the Invention

Now, to describe this invention in more detail, the best mode for carrying out this invention will be described with reference to the accompanying drawings.

First Embodiment

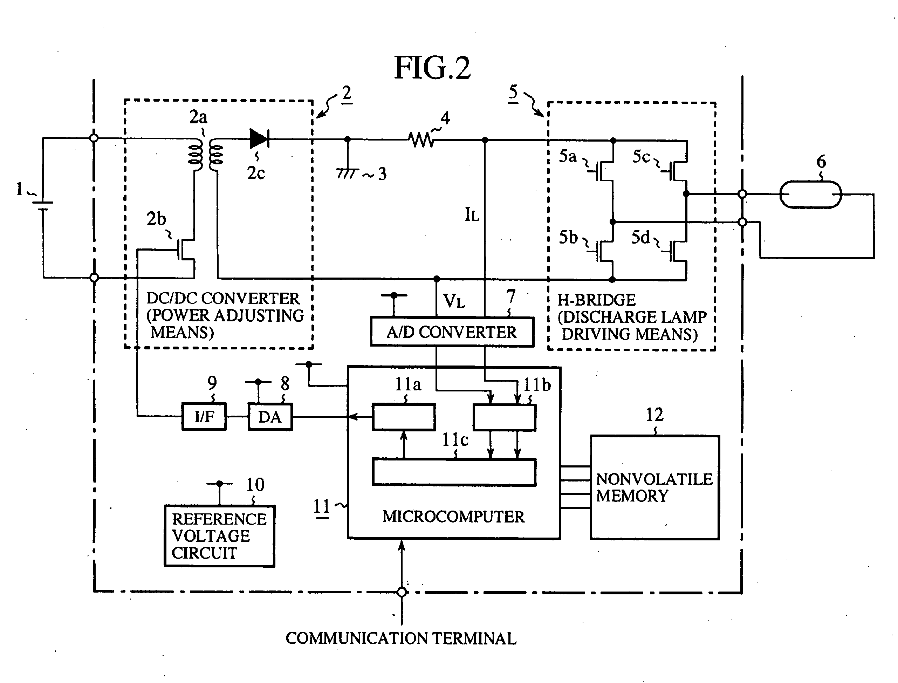

Fig. 2 is a circuit diagram showing the discharge lamp lighting device according to the first embodiment the invention.

Referring to Fig. 2, reference numeral 1 denotes a DC power supply (power supply) such as a battery, reference numeral 2 a DC/DC converter (power adjusting means) for adjusting and outputting the power supplied from the DC power supply 1, reference numeral 2a the transformer of the DC/DC converter 2, reference numeral 2b the FET of the DC/DC converter 2, arid reference numeral 2c the diode of the DC/DC converter 2.

Reference numeral 3 denotes earth, reference numeral 4 a shunt resistance for detecting a discharge current $I_L$, Reference numeral 5 denotes a H-bridge (discharge lamp driving means) for converting the DC power adjusted by the DC/DC converter 2 to an AC power, and reference numerals 5a, 5b, 5c, and 5d FET's, and the H-bridge (discharge lamp driving means) 5 is formed in H by the FET' S 5a-5d.

Reference numeral 6 denotes a discharge lamp driven by the AC power converted by the H-bridge 5, and reference numeral 7 an A/D converter which inputs thereto the discharge lamp voltage $V_L$ from the cathode side of the output of the DC/DC converter 2 and the discharge lamp current $I_L$ from the H-bridge 5 side of the shunt resistance 4, and converts them from an analog value to a digital value, respectively.

Reference numeral 8 denotes a D/A converter for converting the target current value outputted form a microcomputer 11 from a digital value to an analog value, reference numeral 9 an interface (hereinafter referred to as I/F) for driving the DC/DC converter 2 in accordance with the target current converted to an analog value by the D/A converter 8, and reference numeral 10 a reference voltage circuit for generating the reference voltages for the A/D converter 7, the D/A converter 8, and the microcomputer 11 (to be described later).

Reference numeral 11 denotes a microcomputer, and in the microcomputer 11, reference numeral 11a denotes an output current correcting means for correcting the target current outputted to the D/A converter 8, reference numeral 11b an input voltage/current correcting means for correcting the signal inputted from the A/D converter 7, and reference numeral 11c an arithmetic unit for calculating the target current and the correction value.

Reference numeral 12 denotes a nonvolatile memory for storing therein the correction value calculated by the microcomputer 11.

Now, the operation of the discharge lamp lighting device of the first embodiment will be described.

The microcomputer 11 reads in the voltage $V_L$ of the discharge lamp 6 through the A/D converter 7, calculates the current value from the power required for lighting the discharge lamp 6, and outputs the current value to the D/A converter 8 to drive the DC/DC converter 2 through the I/F 9.

However, the discharge lamp power supplied to the discharge lamp 6 under stable lighting condition is preferably 35 W. To this end, the microcomputer 11 calculates the target current by the following equation.

$$\text{(Target current)} = 35/\text{(Discharge lamp voltage)}$$

However, since the voltage $V_L$ is inputted to the microcomputer 11 through the A/D converter 7, the voltage $V_L$ contains a so-called A/D conversion error mainly due to the error between the reference voltage of the A/D converter 7, or the output voltage of the reference voltage circuit 10, and its true value. Thus, letting the output voltage of the reference voltage circuit 10 to be $V_{DD}$, the true value of the output voltage of the reference voltage circuit to be 5 V, the error between the output voltage $V_{DD}$ of the reference voltage circuit 10 and the true value 5 V of the output voltage to be $\alpha$, and the voltage of the discharge lamp that is inputted to the microcomputer 11 to be $DV_L$, the following equations are held.

$$V_{DD} = 5 \times \alpha$$

$$DV_L = V_L/V_{DD} \times 256$$

Where, 256 is the output value when all the bits of digital output of 8 bits of the A/D converter 7 are 1. Further, in the first embodiment and other embodiments (to be described later), the voltage $V_L$ of the discharge lamp inputted to the A/D converter 7 is a value which is previously divided so as to be acceptable to the A/D converter 7. The value of $V_L$ is 85 V, and processed as a voltage of 85 V after it is inputted to the microcomputer 11.

Further, the target current outputted by the microcomputer 11 through the D/A converter 8 also contains a so-called D/A conversion error due to the error between the output voltage of the reference voltage circuit 10 and its true value. Thus, letting the target current calculated by the microcomputer 11 to be $DI_{OBJ}$, and the target current outputted by the D/A converter 8 to be $I_{OBJ}$, the following equations are held.

$$DI_{OBJ} = 35/DV_L$$

$$I_{OBJ} = DI_{OBJ}/5 \times 256 \times \alpha$$

Where, 35 is a preferred value of the discharge lamp power to be supplied to the discharge lamp 6 under the stable lighting condition as described above.

Accordingly, the power W actually supplied to the discharge lamp 6 is expressed by the following equations.

$$W = V_L \times I_{OBJ}$$

$$= DV_L \times V_{DD}/256 \times DI_{OBJ}/5 \times 256 \times \alpha$$

$$= DV_L \times 5 \times \alpha/256 \times DI_{OBJ}/5 \times 256 \times \alpha$$

$$= DV_L \times DI_{OBJ} \times \alpha^2$$

$$= 35 \times \alpha^2$$

As described above, merely calculating the power to be supplied to the discharge lamp 6 from the voltage $DV_L$ inputted to the microcomputer 11 through the A/D converter, and outputting the target current $DI_{OBJ}$ through the D/A converter 8, the power supplied to the discharge results in an error equal to the square of the error $\alpha$ ($\alpha^2$) between the output voltage of the reference voltage circuit 10 and its true value.

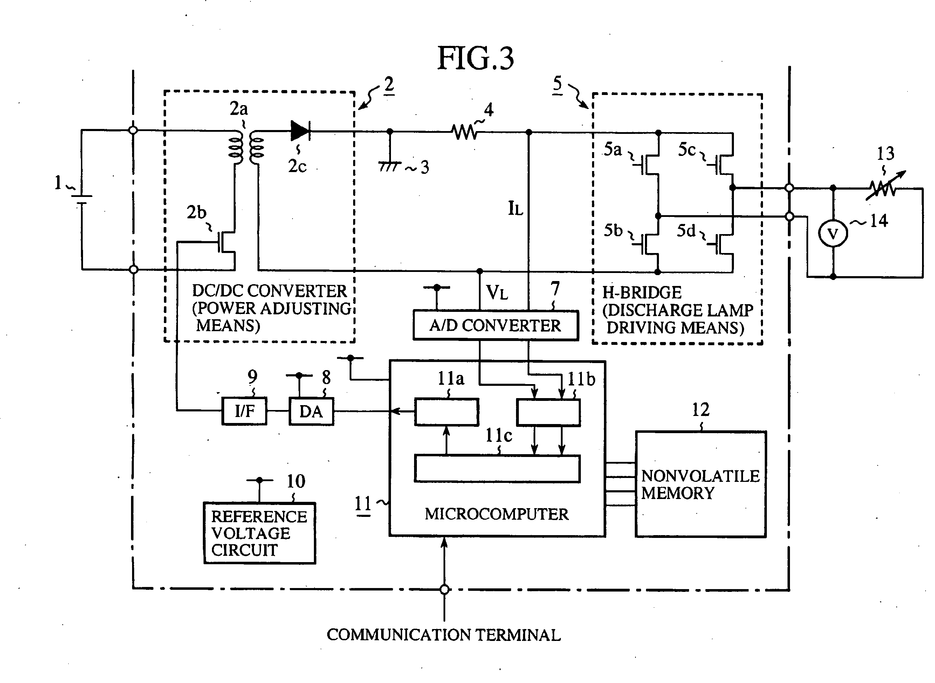

Thus, in the first embodiment, as shown in Fig. 3, a variable adjusting resistor 13 is connected in place of the discharge lamp 6 at the time of power adjustment, the voltage value applied across both ends of the variable adjusting resistor 13 is read by a voltmeter 14, and the variable adjusting resistor 13 is adjusted to set the voltage applied across both ends thereof to a predetermined value, for instance, 85 V, and what is adjusted to 85 V is sent via the communication terminal to the microcomputer 11. The microcomputer calculates the A/D conversion error of the A/D converter 7, or the error $\alpha$ between the output voltage of the reference voltage circuit 10 and its true value, from the voltage A/D value corresponding to 85 V inputted through the A/D converter 7 and the true value of 85 V.

The calculated error $\alpha$ is stored in the nonvolatile memory 12. The error $\alpha$ stored in the nonvolatile memory 12 is read out at the time of actuating the discharge lamp, and stored in the memory (not shown) of the microcomputer 11.

In the above description, the communication terminal is used to inform what is adjusted to 85V to the microcomputer 11, but a configuration may be taken in which, by making the voltage across both ends of the variable adjusting resistor 13 smaller than 68 V which cannot be with the conventional discharge lamp, or a predetermined value exceeding 102 V (for instance, 150 V), the connection of a variable adjusting resistor is recognized in the microcomputer 11, and after a predetermined time (for instance, 10 seconds) has elapsed, the error $\alpha$ between the output voltage of the reference voltage circuit 10 and its true value is calculated.

Using the error $\alpha$ stored in the memory of the microcomputer 11, the discharge lamp voltage $DV_L$ inputted through the A/D converter is corrected by the voltage correcting means 7 through the following equations and inputted to the arithmetic unit 11b of the microcomputer 11, and $DI_{OBJ}$ outputted from the arithmetic unit 11c of the microcomputer 11 to the D/A converter 8 is corrected by the following equations and outputted. Through this correction, the voltage applied to the discharge lamp 6 is corrected with respect to the error $\alpha^2$.

$$DV_L \text{ (after correction)} = DV_L \text{ (before correction)} / \alpha$$

$$DI_{OBJ} \text{ (after correction)} = DI_{OBJ} \text{ (before correction)} \times \alpha$$

That is, the correction by the voltage correcting means 11b of the result $DV_L$ (before correction) converted by the A/D converter 7 is done by dividing the conversion result by the error $\alpha$, and the correction by the current correcting means 11a of the value $DI_{BJ}$ (before correction) outputted to the D/A converter 8 is done by multiplying the outputted value by the error $\alpha$.

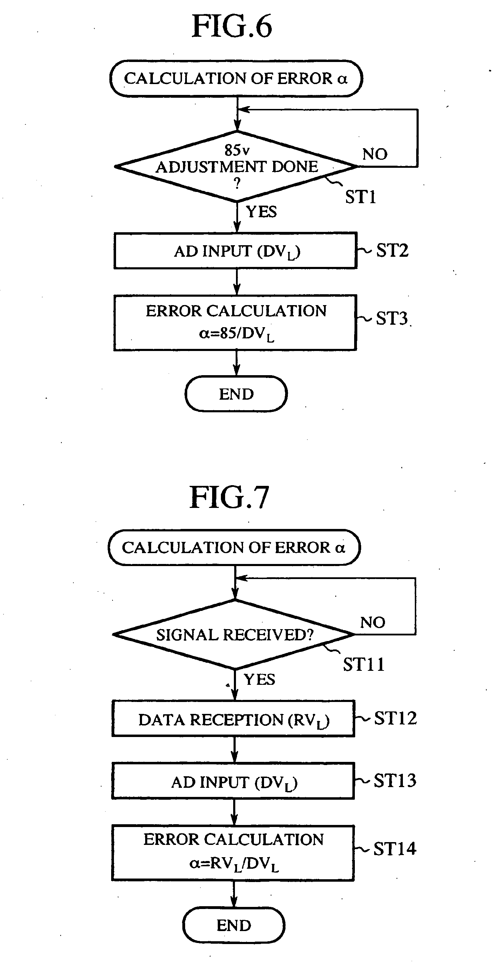

Fig. 6 is flowchart showing the calculation procedure for the error $\alpha$ in the microcomputer 11 of the first embodiment.

In Fig. 6, first, at step ST1, the variable adjusting resistor 13 (Fig. 3) is adjusted for power adjustment, what the voltage across both ends of the variable adjusting resistor 13 is adjusted to 85 V is detected by communication. Then, at step ST2, a voltage corresponding to adjusted 85 V is A/D inputted through the A/D converter.

Then, at step ST3, from the A/D inputted voltage ($DV_L$) and'85 V, as the true value, the error $\alpha$ is calculated by the following equation.

$$\alpha = 85/ \ DV_L$$

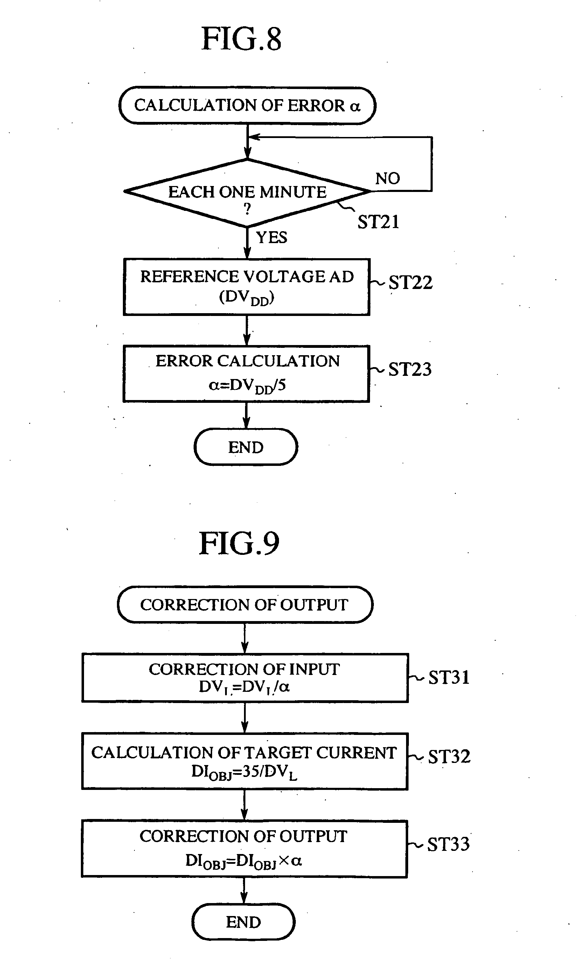

Fig. 9 is a flowchart showing the output correction procedure in the microcomputer 11 of the first embodiment, and the second embodiment and the third embodiment (to be described later).

In Fig. 9, first, at step ST31, the correction of the input is done by the following equation.

$$DV_L \ (before \ correction) = DV_L \ (after \ correction) \ / \alpha$$

Then, at step ST32, the calculation of the target current is made by the following equation so that the output current comes to 35 W.

$$DI_{OBL} = 35/DV_L$$

Then, at step ST33, the correction of the output is done by the following equation.

$$DI_{OBL} \ (before \ correction) = DI_{OBL} \ (after \ correction) \times \alpha$$

As obvious from the above, according to the first embodiment, the following configuration has been taken. At the time of power adjustment, the variable adjusting resistor 13 is connected in place of the discharge lamp 6, and the variable adjusting resistor 13 is adjusted to set the voltage applied across both ends of thereof to a predetermined value, and the microcomputer 11 calculates the error $\alpha$ of the reference voltage circuit 10 from the voltage value converted by the A/D converter 7 and the predetermined true value, and the calculated error $\alpha$ is stored in the nonvolatile memory 12, at the time of lighting, the error $\alpha$ stored in the nonvolatile memory 12 is read out to correct the input voltage and the output current. This not only eliminates the need for adjustment work for each of the input voltage and the output current in power adjustment to shorten the adjusting time, but also relieves the operation load on the microcomputer 11, thereby enabling the use of a lower-grade microcomputer to go down the cost.

Further, since it eliminates the need to store a correction value for each of the input voltage and the output current, the capacity of the nonvolatile memory 12 can be reduced, thereby enabling the use of a lower-capacity nonvolatile memory to go down the cost.

Further, since a communication terminal for receiving therefrom an external signal is further provided, and the error $\alpha$ of the reference voltage is stored in the nonvolatile memory by sending a signal instructing the communication terminal to store the error $\alpha$ into the nonvolatile memory after the voltage across both ends of the power adjusting resistance comes to a predetermined value. This adjusts the voltage by only connecting a resistance to the output.

Further, a communication terminal for receiving therefrom an external signal is further provided, and the error $\alpha$ of the reference voltage is stored in the nonvolatile memory when the voltage across both ends of the power adjusting resistance inputted to the communication terminal comes to a predetermined value. This adjusts the voltage by only connecting a resistance to the output.

Second Embodiment

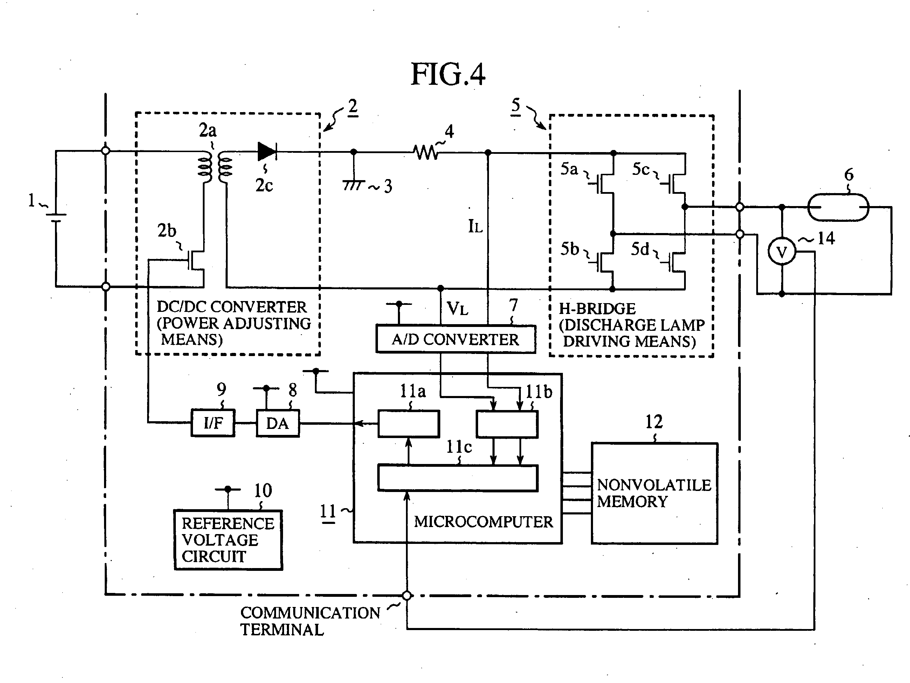

Fig. 4 is a circuit diagram showing the discharge lamp lighting device according to the second embodiment of the invention, and in Fig. 4, 14 is a voltmeter. Like reference numerals as the first embodiment in Fig. 2 indicate the same components.

In the first embodiment, what the voltage applied across both ends of the variable adjusting resistor 13 is adjusted to a predetermined value, for instance, 85 V, is sent to the microcomputer 11 through the communication terminal, whereas in the second embodiment, the voltmeter 14 is connected to both ends of the discharge lamp 6, and the output reading of the voltmeter 14 is sent to the microcomputer 11 through the communication terminal.

Now, the operation of the discharge lamp lighting device of the second embodiment will be described.

In the second embodiment, as shown in Fig. 4, at the time of power adjustment, the voltmeter 14 is connected to both ends of the discharge lamp 6, and the output reading of the voltmeter 14 is sent to the communication terminal of the microcomputer 11, and the microcomputer 11 calculates the A/D conversion error of the A/D converter 7, i.e., the error $\alpha$ between the output voltage of the reference voltage circuit 10 and its true value from the voltage A/D value of the discharge lamp 6 converted by the A/D converter 7, and the actual voltage of the discharge lamp inputted through the communication terminal. Calculation of the error $\alpha$ may be made each time a signal is sent from the communication terminal, or after a predetermined time has elapsed since the actuation of the lighting. The subsequent operations follow the same procedure as the first embodiment.

Fig. 7 is a flowchart showing the calculation procedure for the error $\alpha$ by the microcomputer 11 of the second embodiment. In Fig. 7, first, at step ST11, detection is made as to whether or not the output signal of the voltmeter 14 connected to both ends of the discharge lamp (Fig. 4) for power adjustment is inputted to the communication terminal of the microcomputer 11.

At step ST12, the voltage $RV_L$ across both ends of the discharge lamp 6, inputted from the communication terminal, is received.

At step ST13, the voltage across both ends of the discharge lamp 6 is A/D converted by the A/D converter.

Then, at step ST14, from the A/D converted voltage $DV_L$ and $RV_L$, the true value, the error $\alpha$ is calculated by the following equation.

$$\alpha = RV_L/DV_L$$

As obvious from the above, according to the second embodiment, the following configuration has been taken. At the time of power adjustment, the error $\alpha$ of the reference voltage circuit 10 is calculated from the output reading of the power meter 14 connected to both ends of the discharge lamp 6 and the A/D value inputted through the A/D converter 7, and the calculated error $\alpha$ is stored in the nonvolatile memory 12, while at the time of lighting, the error $\alpha$ stored in the nonvolatile memory 12 is read out to correct the input power and the output current. This, at the time of power adjustment, eliminates the need for adjustment work for each of the input voltage and the output current to shorten the adjusting time, but also relieves the operation load on the microcomputer 11, thereby enabling the use of a lower-grade microcomputer to go down the cost.

Further, since it eliminates the need to store a correction value for each of the input voltage and the input current, the capacity of the nonvolatile memory 12 can be reduced, thereby enabling the use of a lower-capacity nonvolatile memory to go down the cost.

Further, in power adjustment, the discharge lamp 6 is used as it is and the voltage of the discharge lamp 6 is instructed as it is to the microcomputer 11, so that it dispenses with special devices such as a variable adjusting resistor for power adjustment or communication facility for power adjustment, thereby enabling reduction in the number of process steps for production as well as the facility cost.

Further, a communication terminal for receiving therefrom an external signal is also provided, and the error $\alpha$ of the reference voltage is stored in a nonvolatile memory when the voltage across both ends of the power adjusting resistor inputted to the communication terminal comes to a predetermined value, thereby allowing an adjustment by only connecting a resistance to the output.

Further, since the power correction can be periodically done, change in the output power due to a change in the reference voltage with the passage of time can be corrected, thereby keeping the output power with high precision.

Third Embodiment

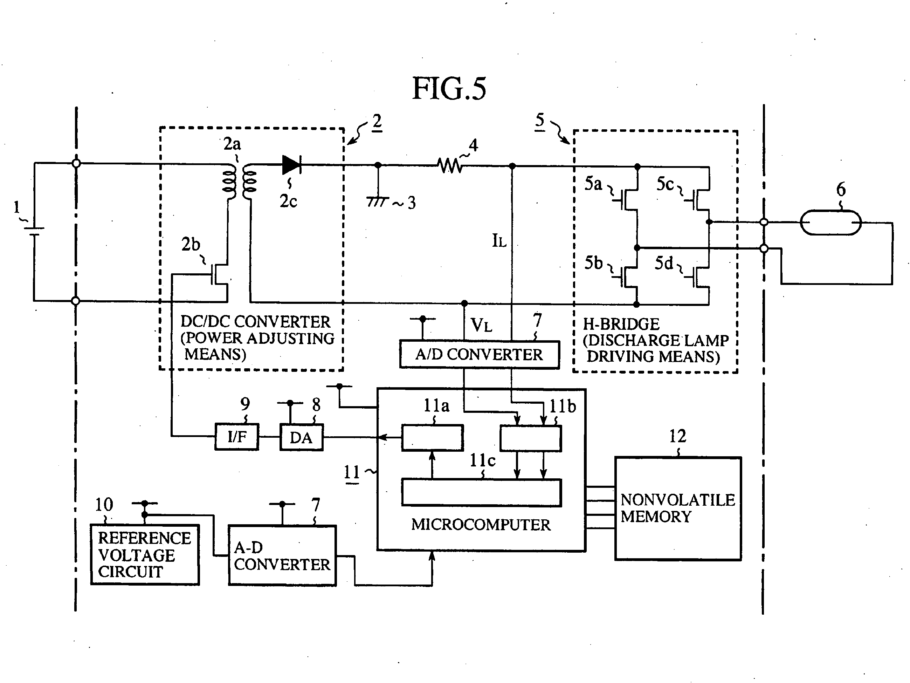

Fig. 5 is a circuit diagram showing the discharge lamp lighting device according to the third embodiment of the present invention, and in Fig. 5, like reference numerals as the first embodiment in Fig. 2 indicate like components. In Fig. 5, an A/D converter 7 is placed between the reference voltage circuit 10 and the microcomputer 11 for clarification of the drawing, and this A/D converter 7 is the same component as the A/D converter 7 for inputting the voltage $V_L$ and the current $I_L$ to the microcomputer 11.

Now, the operation of the discharge lamp lighting device of the third embodiment will be described.

In the third embodiment, as shown in Fig. 5, at the time of power adjustment, the output voltage of the reference voltage circuit 10 is A/D converted through the A/D converter 7, and the A/D conversion error of the A/D converter 7, or the error $\alpha$ between the true value of the output voltage of the reference voltage circuit 10 is calculated from the error between and the true value (for instance, 5 V) of the reference voltage circuit. Calculation of the error may be periodically made, or a predetermined time has elapsed since the actuation of the lighting. The subsequent operations follow the same procedure as the first embodiment.

Fig. 8 is a flowchart showing the calculation procedure of the error $\alpha$ by the microcomputer 11 of the third embodiment. In Fig. 8, first, at step ST21, the process waits for calculation of the error $\alpha$ at every one minute, and then, at step ST22, the output of the reference voltage circuit 10 is A/D converted by the A/D converter 7.

Then, at step ST23, from the A/D converted reference voltage $DV_{DD}$ and 5 V, the true value, the error $\alpha$ is calculated by the following equation.

$$\alpha = DV_{DD}/5$$

In the above description, although the voltage of the reference voltage circuit 10 is inputted to the microcomputer 11 by the A/D converter 7, the actual output voltage VDD of the reference circuit 10 may be measured by a voltmeter, and then the error $\alpha$ may be obtained from the measured value of the voltmeter, which is the actual value of the reference circuit 10, and the A/D converted value of the output voltage VDD. This corrects even the error of the A/D converter and carries out a more accurate measurement.

As obvious from the above, according to the third embodiment, the following configuration has been taken. The error $\alpha$ of the reference voltage circuit 10 is calculated from the output voltage of the reference voltage circuit 10 and the true value of the reference voltage circuit 10, and the calculated error $\alpha$ is stored in the nonvolatile memory 12. At the time of lighting, the error $\alpha$ stored in the nonvolatile memory 12 is read out to correct the input power and the output current. This eliminates the need for adjustment work for each of the input power and the output current at the time of adjustment, which not only shortens the adjusting time, but also relieves the operation load on the microcomputer 11, thereby enabling the use of a lower-grade microcomputer to go down the cost.

Further, since it eliminates the need to store a correction value for each of the input voltage and the input current, the capacity of the nonvolatile memory 12 can be reduced, thereby allowing the use of a lower-capacity nonvolatile memory to go down the cost.

Furthermore, in power adjustment, it dispenses with special devices such as a variable adjusting resistor and a voltmeter for power adjustment, and communication facility for power adjustment, the number of process steps for production and the facility cost can be reduced.

Moreover, since power correction can be periodically done, change in the output power due to a change in the reference voltage with the passage of time can be corrected, thereby keeping the output power with high precision.

Industrial Applicability

As described above, the discharge lamp lighting device according to this invention is suitable for the discharge lamp lighting device for automobiles or the like, where the output power may change due to a change with the passage of time.

**Claims**

1. A discharge lamp lighting device comprising:

   an A/D converter (7) for measuring the discharge lamp voltage;
   a D/A converter (8) for outputting a target current;
   the A/D converter and D/A converter (8) supplied with a reference voltage;
   reference voltage error calculating means for calculating an error alpha between said reference voltage and the true value of said reference voltage, the reference voltage error calculating means adapted to calculate the error alpha from a converted result of a predetermined voltage converted by said A/D converter (7) based on said reference voltage;
   a nonvolatile memory (12) for storing therein the error alpha of said reference voltage;
   voltage correcting means (11b) for correcting the result converted by said A/D converter (7) in relation to the magnitude of the error $\alpha$ of said reference voltage stored in the nonvolatile memory (12); and
   current correcting means (11a) for correcting the value outputted to said D/A converter (8) in relation to the magnitude of the error $\alpha$ of said reference voltage stored in said nonvolatile memory (12).

2. The discharge lamp lighting device according to claim 1, further comprising
   a communication terminal for receiving therefrom an external signal,
   wherein the predetermined voltage is a voltage generated across both ends of a power adjusting resistance (2) connected in place of the discharge lamp; and
   means for sending via the communication terminal a signal instructing to store the error alpha of said reference voltage into the nonvolatile memory after the voltage across both ends of said power adjusting resistance (2) comes to a predetermined value.

3. The discharge lamp lighting device according to claim 1, further comprising a communication terminal for receiving therefrom an external signal;
   wherein the predetermined voltage is a voltage generated across both ends of a power adjusting resistance (2) connected in place of the discharge lamp; and
   wherein the non-volatile memory (12) is adapted to store the error alpha of said reference voltage when the voltage across both ends of the power adjusting resistance (2) inputted to said communication terminal comes to a predetermined value.

4. The discharge lamp lighting device according to claim 1, further comprising:

   wherein the predetermined voltage is the voltage across both ends of said discharge lamp which is read in and converted by said A/D converter (7) to produce the converted result;

5. The discharge lamp lighting device according to claim 4,
   wherein the error alpha of said reference voltage is stored in said nonvolatile memory (12) when the voltage across both ends of the discharge lamp inputted to the communication terminal comes to a predetermined value.

6. The discharge lamp lighting device according to claim 1,
   wherein the predetermined voltage is the reference voltage.

7. The discharge lamp lighting device according to claim 6,
   wherein the error alpha of the reference voltage is stored in the nonvolatile memory (12) when the reference voltage comes to a predetermined value.

8. The discharge lamp lighting device according to claim 4,
   wherein the error alpha of the reference voltage is stored in the nonvolatile memory (12) at least once after a predetermined time has elapsed since the lighting of the discharge lamp.

9. The discharge lamp lighting device according to the claim 6,
   wherein the error alpha of the reference voltage is stored in the nonvolatile memory (12) at least once after a predetermined time has elapsed since the lighting of the discharge lamp.

10. The discharge lamp lighting device according to claim 1,
    wherein the correction of the result which is converted by the A/D converter (7) is done by the voltage correcting means (11b) by dividing said converted result by the error alpha, and the correction of the value outputted to the D/A converter (8) is done by the current correcting means (11a) by multiplying said outputted value by the error alpha.

**Patentansprüche**

1. Entladungslampenbeleuchtungsgerät, umfassend:

   einen A/D-Wandler (7) zum Messen der Entladungslampenspannung;
   einen D/A-Wandler (8) zum Ausgeben eines Zielstroms;
   wobei der A/D-Wandler und D/A-Wandler (8) mit einer Referenzspannung versorgt werden;
   Referenzspannungs-Fehlerberechnungsmittel zum Berechnen eines Fehler-Alphas zwischen der Referenzspannung und dem tatsächlichen Wert der Referenzspannung, wobei das Referenzspannungs-Fehlerberechnungsmittel angepasst ist, um das Fehler-Alpha von einem umgewandelten Ergebnis einer vorbestimmten Spannung zu berechnen, die durch den A/D-Wandler (7) umgewandelt wird, basierend auf der Referenzspannung;
   einen nicht-flüchtigen Speicher (12) zum Speichern darin des Fehler-Alphas der Referenzspannung;
   Spannungskorrekturmittel (11b) zum Korrigieren des Ergebnisses, das durch den A/D-Wandler (7) umgewandelt wird, in Bezug auf die Größe des Fehler-Alphas der Referenzspannung, die in dem nicht-flüchtigen Speicher (12) gespeichert ist; und
   Spannungskorrekturmittel (11a) zum Korrigieren des Werts, der zu dem D/A-Wandler (8) ausgegeben wird, in Bezug auf die Größe des Fehler-Alphas der Referenzspannung, die in dem nicht-flüchtigen Speicher (12) gespeichert ist.

2. Entladungslampenbeleuchtungsgerät nach Anspruch 1, ferner umfassend
ein Kommunikationsendgerät zum Empfangen davon eines externen Signals,
wobei die vorbestimmte Spannung eine Spannung ist, die über beide Enden eines Leistungsanpassungswiderstands (2) generiert wird, der statt der Entladungslampe verbunden ist; und
Mittel zum Senden über das Kommunikationsendgerät eines Signals, das anweist, das Fehler-Alpha der Referenzspannung in den nicht-flüchtigen Speicher zu speichern, nachdem die Spannung über beide Enden des Leistungsanpassungswiderstands (2) zu einem vorbestimmten Wert kommt.

3. Entladungslampenbeleuchtungsgerät nach Anspruch 1, ferner umfassend ein Kommunikationsendgerät zum Empfangen davon eines externen Signals;
wobei die vorbestimmte Spannung eine Spannung ist, die über beide Enden eines Leistungsanpassungswiderstands (2) generiert wird, der statt der Entladungslampe verbunden ist; und
wobei der nicht-flüchtige Speicher (12) angepasst ist, um das Fehler-Alpha der Referenzspannung zu speichern, wenn die Spannung über beide Enden des Leistungsanpassungswiderstands (2), die in das Kommunikationsendgerät eingegeben wird, zu einem vorbestimmten Wert kommt.

4. Entladungslampenbeleuchtungsgerät nach Anspruch 1, ferner umfassend:

wobei die vorbestimmte Spannung die Spannung über beide Enden der Entladungslampe ist, welche eingelesen und konvertiert wird durch den A/D-Wandler (7), um das umgewandelte Ergebnis zu erzeuge:.

5. Entladungslampenbeleuchtungsgerät nach Anspruch 4, wobei das Fehler-Alpha der Referenzspannung in dem nicht-flüchtigen Speicher (12) abgespeichert wird, wenn die Spannung über beide Enden der Entladungslampe, die in das Kommunikationsendgerät eingegeben wird, zu einem vorbestimmten Wert kommt.

6. Entladungslampenbeleuchtungsgerät nach Anspruch 1, wobei die vorbestimmte Spannung die Referenzspannung ist.

7. Entladungslampenbeleuchtungsgerät nach Anspruch 6, wobei das Fehler-Alpha der Referenzspannung in dem nicht-flüchtigen Speicher (12) abgespeichert wird, wenn die Referenzspannung zu einem vorbestimmten Wert kommt.

8. Entladungslampenbeleuchtungsgerät nach Anspruch 4, wobei das Fehler-Alpha der Referenzspannung in dem nicht-flüchtigen Speicher (12) mindestens einmal abgespeichert wird nachdem eine vorbestimmte Zeit abgelaufen ist seit der Beleuchtung der Entladungslampe.

9. Entladungslampenbeleuchtungsgerät nach Anspruch 6, wobei das Fehler-Alpha der Referenzspannung in dem nicht-flüchtigen Speicher (12) mindestens einmal abgespeichert wird nachdem eine vorbestimmte Zeit abgelaufen ist seit der Beleuchtung der Entladungslampe.

10. Entladungslampenbeleuchtungsgerät nach Anspruch 1, wobei die Korrektur des Ergebnisses, welches durch den A/D-Wandler (7) umgewandelt wird, durch das Spannungskorrekturmittel (11b) ausgeführt wird durch Teilen des umgewandelten Ergebnisses durch das Fehler-Alpha, und die Korrektur des Wertes, der zu dem A/D-Wandler (8) ausgegeben wird, durch das Stromkorrekturmittel (11a) ausgeführt wird, durch Multiplizieren des ausgegebenen Werts mit dem Fehler-Alpha.

**Revendications**

1. Dispositif d'exploitation d'une lampe à décharge, comprenant :

un convertisseur A/D (7) pour mesurer la tension de la lampe à décharge,
un convertisseur D/A (8) pour délivrer un courant cible, le convertisseur A/D et le convertisseur D/A étant alimentés par une tension de référence,
un moyen de calcul d'une erreur de tension de référence, pour calculer une erreur alpha entre ladite tension de référence et la valeur vraie de ladite tension de référence, le moyen de calcul de l'erreur de tension de référence étant adapté pour calculer l'erreur alpha à partir d'un résultat de conversion d'une tension prédéterminée convertie par ledit convertisseur A/D (7) sur base de ladite tension de référence,

une mémoire non volatile (12) pour y conserver l'erreur alpha de ladite tension de référence,

un moyen de correction de la tension (11b) pour corriger le résultat converti par ledit convertisseur A/D (7) en liaison avec l'amplitude de l'erreur alpha de ladite tension de référence conservée dans la mémoire non volatile (12), et

un moyen de correction du courant (11a) pour corriger la valeur délivrée audit convertisseur D/A (8) en liaison avec l'amplitude de l'erreur alpha de ladite tension de référence conservée dans ladite mémoire non volatile (12).

2. Dispositif d'exploitation d'une lampe à décharge selon la revendication 1, comprenant de plus un terminal de communication pour en recevoir un signal externe,

dans lequel la tension prédéterminée est une tension générée entre les deux extrémités d'une résistance (2) d'ajustement de la puissance, banchée à la place de la lampe à décharge, et

un moyen pour envoyer par l'intermédiaire du terminal de communication un signal commandant de mémoriser l'erreur alpha de ladite tension de référence dans ladite mémoire non volatile après que la tension entre les deux extrémités de ladite résistance (2) d'ajustement de la puissance ait atteint une valeur prédéterminée.

3. Dispositif d'exploitation d'une lampe à décharge selon la revendication 1, comprenant de plus un terminal de communication pour en recevoir un signal externe,

dans lequel la tension prédéterminée est une tension générée entre les deux extrémités d'une résistance (2) d'ajustement de la puissance, banchée à la place de la lampe à décharge, et

ladite mémoire non volatile (12) est prévue pour conserver l'erreur alpha de ladite tension de référence lorsque la tension entre les deux extrémités de ladite résistance (2) d'ajustement de la puissance, fournie audit terminal de communication, atteint une valeur prédéterminée.

4. Dispositif d'exploitation d'une lampe à décharge selon la revendication 1, dans lequel, en outre, la tension prédéterminée est la tension entre les deux extrémités de ladite lampe de décharge, qui est lue et est convertie par ledit convertisseur A/D (7) pour produire le résultat converti.

5. Dispositif d'exploitation d'une lampe à décharge selon la revendication 4, dans lequel l'erreur alpha de ladite tension de référence est conservée dans ladite mémoire non volatile (12) lorsque la tension entre les deux extrémités de la lampe à décharge, fournie au terminal de communication, atteint une valeur prédéterminée.

6. Dispositif d'exploitation d'une lampe à décharge selon la revendication 1, dans lequel la tension prédéterminée est la tension de référence.

7. Dispositif d'exploitation d'une lampe à décharge selon la revendication 6, dans lequel l'erreur alpha de la tension de référence est conservée dans la mémoire non volatile (12) lorsque la tension de référence atteint une valeur prédéterminée.

8. Dispositif d'exploitation d'une lampe à décharge selon la revendication 4, dans lequel l'erreur alpha de la tension de référence est conservée dans la mémoire non volatile (12) au moins une fois après écoulement d'un laps de temps prédéterminé après l'allumage de la lampe à décharge.

9. Dispositif d'exploitation d'une lampe à décharge selon la revendication 6, dans lequel l'erreur alpha de la tension de référence est conservée dans la mémoire non volatile (12) au moins une fois après écoulement d'un laps de temps prédéterminé après l'allumage de la lampe à décharge.

10. Dispositif d'exploitation d'une lampe à décharge selon la revendication 1, dans lequel la correction du résultat qui est converti par le convertisseur A/D (7) est effectuée par le moyen de correction de la tension (11b) par division dudit résultat converti par l'erreur alpha, et la correction de la valeur délivrée au convertisseur D/A (8) est effectuée par le moyen de correction du courant (11a) par multiplication de ladite valeur délivrée par l'erreur alpha.

# FIG.1

DISCHARGE LAMP
LIGHTING CIRCUIT — 3

- DC/DC CONVERTER — 31
- BATTERY — 1
- 2
- LIGHTING CONTROL MEANS — 32
- LIGHTING MEANS — 33
- DISCHARGE LAMP — 4
- EXTERNAL CONTROL MEANS — 5
- 6 7 8 9
- VOLTAGE MEASURING MEANS — 34
- CURRENT MEASURING MEANS — 35
- POWER CALCULATING MEANS — 36
- CORRECTION VALUE DETERMINING MEANS — 37
- NONVOLATILE MEMORY — 38

EP 1 370 120 B1

# FIG.2

# FIG.3

# FIG.4

# FIG.5

EP 1 370 120 B1

# FIG.6

CALCULATION OF ERROR α

85v
ADJUSTMENT DONE
? — NO ⟶ ST1

YES

AD INPUT (DV$_L$) — ST2

ERROR CALCULATION
α=85/DV$_L$ — ST3

END

# FIG.7

CALCULATION OF ERROR α

SIGNAL RECEIVED? — NO ⟶ ST11

YES

DATA RECEPTION (RV$_L$) — ST12

AD INPUT (DV$_L$) — ST13

ERROR CALCULATION
α=RV$_L$/DV$_L$ — ST14

END

# FIG.8

$$\text{CALCULATION OF ERROR } \alpha$$

EACH ONE MINUTE ? — NO

~ ST21

YES

REFERENCE VOLTAGE AD
$(DV_{DD})$ — ST22

ERROR CALCULATION
$\alpha = DV_{DD}/5$ — ST23

END

# FIG.9

CORRECTION OF OUTPUT

CORRECTION OF INPUT
$DV_L = DV_L/\alpha$ — ST31

CALCULATION OF TARGET CURRENT
$DI_{OBJ} = 35/DV_L$ — ST32

CORRECTION OF OUTPUT
$DI_{OBJ} = DI_{OBJ} \times \alpha$ — ST33

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 7201472 A

- JP 2000082593 A